# EUROPEAN PATENT APPLICATION

(11) **EP 1 555 246 A1**
(43) Date of publication of application: **20.07.2005**
(21) Application number: 04075091.1
(22) Date of filing: 15.01.2004
(51) Int. Cl.: C02F 9/02, C02F 1/24, C02F 1/20, C02F 1/463, C02F 1/72, C02F 9/06, C02F 1/52

(54) **Effluent treatment method and apparatus**

(71) Applicant: Renaud, Craig P., Bruckless, County Donegal (IE); McBrearty, Eugene, Killybegs, Co. Donegal (IE)
(72) Inventor: Renaud, Craig P., Bruckless, County Donegal (IE); McBrearty, Eugene, Killybegs, Co. Donegal (IE)
(74) Representative: Walsh, Michael Joseph

(57) **Abstract**

In a method and apparatus for separating and removing contaminants from an optionally continuously flowing aqueous effluent containing contaminants, effluent containing entrained contaminants is introduced into an enclosed chamber in which the contaminants are formed into a particle floc separable from the aqueous phase and is then advanced to a separation tank where floating floc is removed from the aqueous stream. The process may be augmented by the application of aeration, oxidation, and/or coagulation steps prior to the effluent entering the separation tank. Significant improvements are effected in respect of simplicity, power efficiency and commercial viability.

## Description

### Field of the Invention

The present invention relates to the treatment of effluent. In particular, the invention is directed to the separation of contaminants from an aqueous medium. The invention also extends to the elimination of unwanted coloration from treated water.

### Background to the Invention

The art of electrocoagulation and electroflocculation has received much attention in the last few years, and may be perceived as 'new' technology. In truth, the idea has been around for over one hundred years. Quite simply, electrocoagulation and electroflocculation are means of de-stabilising (coagulating) and agglomerating (flocculating) charged colloidal suspensions using electricity and a consumable electrode.

One of the first recorded trials was performed in London in 1889; the technology used there was revived in Japan in the 1990s. One of the first patents was awarded in the United States in the early years of the twentieth century, but the technology was abandoned due to high operating costs. Further work has been done since, with a myriad of reactors, cells, processes, patents, etc being produced, mostly with limited applicability or purely academic results.

Many electrode geometries have been suggested, from the plates of Landreth in US-A-1,095,893, issued May, 5 1914, the cylinders of Sundell (WO-A-9414709) and others (DE-A-693241650 and EP-A-0,675,855), to metal shot, beads or particles such as proposed by Lambert et al (EP-A-1,053,976 and EP-A-1,156,014) and, in precedence, Gardner-Clayson et al (US-A-5,372,690). These geometries and their associated patents each claim to, but fall short of, providing a long term, commercially viable method of water purification.

Landreth's plates and those of others are costly to produce and replace, and by their very nature and size require frequent replacement. Rotation of the anode, while enabling a good connection to electrically charge it at the current levels required to achieve realistic results, makes Sundell's water purification plant difficult to implement. Lambert *et al* and Gardner-Clayson *et al* try a bed of beads or metallic shot used as 'moveable current carriers' as an approach to the wear and consumption issues, but these fall short for physical, electrical and mechanical reasons. Saur *et al* (US-A-6,099,703) allude to a distance piece while rotating either the cathode or anode or both, but this arrangement is plagued with flushing and electrical current-to-electrode transfer difficulties which were also problems for Sundell, one of the named co-inventors.

Difficulties arise when the floc formed by the process is to be dealt with in real-world time-frames and volumes. Few dissertations on the art delve to any extent into the issue of floc and sludge handling at all. Saur *et al* mention using the hydrogen gas formed at the cathode to float the floc formed for retrieval by what amounts to a conventional sludge scraper common in dissolved air flotation (DAF) systems. He also suggests, as do Lambert *et al,* a 'helical phase separator', but this is technically not feasible without subjecting the floc to high shear and friction stresses to attain the necessary speeds through the helix. Saur acknowledges `... calm flow conditions... so that the flocs will not be damaged...' as being crucial; the stresses entailed in helical separation are the opposite.

Further clouding the technology is the issue of using an oxidant in conjunction with the electrochemical reactions. The use of an oxidant is suggested, most notably by Lambert *et al,* prior to entering the electrochemical process, in conjunction with cavitation and superatmospheric pressure in the reactors.

Power sources for the electrochemical reactors are either vaguely referred to as 'DC current sources', or overdone. Approximately 80 percent of the complexity in some designs is due to the polarity reversing nature of the supply for cleaning of the reactor anode/cathode geometries, for example as suggested by Lambert *et al.*

### Object of the Invention

It is an object of the invention to provide an improved effluent or waste water treatment system, optionally based on electroflocculation/coagulation, enabling effective, economic and thorough separation of contaminants and coloration from the inflow to be treated. It is another object of the invention to provide an improved method and apparatus for handling floc material in a water treatment process. It is a still further object of this invention to make the use of electrocoagulation and electroflocculation, as a general process, more commercially viable by solving the dilemmas or difficulties of prior process and apparatus art.

### Summary of the Invention

The process described herein realises, in one embodiment, continuous flow treatment of the water to form flocs separate from the aqueous phase, and continuous removal of the floc as it forms. The invention is however also adapted to batch treatments, with interruptions in flow. In addition, the sludge created by the floc developed according to the invention is inherently smaller in volume and denser than is realised by mere flotation and conventional scraping due to its reduced water content and zero gas (foam) content.

The process described herein realises excellent results without requiring high pressures and pressure discontinuities within the reactors. Some effluent or waste streams or flows may benefit from a low dosage oxidation step just after the electrochemical step, but generally, any added oxidant is better and preferably utilised post electrochemical treatment. Indeed, oxidation, if required, is suitably realised as a completely separate step, after the water has been treated electrochemically to remove suspended solids. This results in a more efficient use of oxidant; thus less oxidant is required.

The power supply used in this process is specifically designed for use by high current electrochemical reactors. It provides bulk DC current economically and without complex switching and timing circuits.

Polarity reversal of the supply for cleaning the reactor anode/cathode geometries is not required or necessary in the design according to the invention, thereby dispensing with up to 80% of the complexity of certain prior art configurations.

More particularly, the present invention in a first aspect or embodiment provides a method for removing floating floc and/or foam and or/sludge (FFS) accumulating on a free surface of an effluent containing an aqueous phase, wherein said floating floc and/or foam and or/sludge (FFS) is removed by suction. The effluent is preferably accommodated in a region substantially free from turbulent flow so that particles in suspension contained in the effluent are free to rise towards said free surface of the effluent to form said floating floc and/or foam and or/sludge (FFS).

In a second aspect, the present invention provides a method of treating effluent containing an aqueous phase and particles in suspension, comprising the steps of:
(a) accommodating the effluent in a region substantially free from turbulent flow so that the particles are free to rise towards a free surface of the effluent to accumulate in the form of floating floc and/or foam and or/sludge (FFS); and
(b) removing by suction said floating floc and/or foam and or/sludge (FFS) accumulating on said free surface of the effluent.

The suction applied to remove said floating floc and/or foam and or/sludge (FFS) suitably also serves to establish a reduced (less than ambient atmospheric) pressure to which said free surface of the effluent is exposed.

In a third aspect, the invention provides a method of treating effluent containing an aqueous phase and particles in suspension, comprising the steps of:
(a) accommodating the effluent in a region substantially free from turbulent flow so that the particles are free to rise towards a free surface of the effluent to accumulate in the form of floating floc and/or foam and or/sludge (FFS); and
(b) exposing the free surface of the effluent to reduced (less than ambient atmospheric) pressure so that the migration of the particles to said free surface is encouraged. Said floating floc and/or foam and or/sludge (FFS) accumulating on said free surface of the effluent is preferably removed as part of the method of the invention, suitably by suction, and the suction applied to remove said floating floc and/or foam and or/sludge (FFS) may again also serve to establish said reduced (less than ambient atmospheric) pressure to which the free surface of the effluent is exposed.

The steps of accommodating the effluent in a region substantially free from the turbulent flow and exposing the free surface of the effluent to reduced (less than ambient atmospheric) pressure are repeated in an advantageous embodiment of the invention and the effluent may then also be further treated between at least one said step of accommodating and exposing and a subsequent said step. The further treatment of the effluent between said steps comprises oxidation or ozonation.

Residual floc and/or foam and or/sludge (FFS) remaining in said effluent and accumulating by settlement towards a lower part of the or each said region substantially free from turbulent flow is suitably removed intermittently from said region, while the effluent may also be pre-treated so that the particles are at least in part oxidised or otherwise adapted for upward migration towards said free surface when accommodated in a said region substantially free from turbulent flow. The pre-treatment may comprise electroflocculation, a unipolar electric potential preferably being applied to the effluent to effect said electroflocculation, or the effluent is pre-treated by oxidation. Such oxidation may be effected by entrapment of gas in the effluent prior to accommodating the effluent in a said region substantially free from turbulent flow by release of gas into the effluent within a said region substantially free from turbulent flow.

Said inflow of effluent to at least one said region substantially free from turbulent flow is suitably substantially continuous.

This significantly reduces the overall size of the waste treatment plant as the volume of space required for handling the foam generated is substantially less than for prior art systems. Similarly, the use of reduced pressure above the free surface of the aqueous body undergoing treatment provides for an efficient method of removing the floc without disturbing the flow or stability of the aqueous phase.

Alternatively, inflow of effluent to at least one said region substantially free from turbulent flow may be intermittent, said inflow of effluent being initially directed, for example, to one of a plurality of regions substantially free from turbulent flow and subsequently diverted to another said region.

Floating floc and/or foam and or/sludge (FFS) removed by said suction is preferably accumulated for disposal at a location remote from the or each said region substantially free from turbulent flow.

Said suction applied to remove said floating floc and/or foam and or/sludge (FFS) may be effective at a location disposed at a level higher than that of said free surface of the effluent, said location being in communication with said free surface for the purposes of gas flow and uplift of said floating floc and/or foam and or/sludge (FFS) from said free surface to said location, or alternatively at a location disposed at a level lower than that of said free surface of the effluent, said location also being in communication with said free surface for the purposes of gas flow and transfer of said floating floc and/or foam and or/sludge (FFS) from said free surface to said location.

In a favoured embodiment of the method of the invention, said suction applied to remove said floating floc and/or foam and or/sludge (FFS) may be selectively effective either at a location disposed at a level higher than that of said free surface of the effluent and/or at a location disposed at a level lower than that of said free surface of the effluent, each of said locations being in communication with said free surface for the purposes of gas flow and uplift of said floating floc and/or foam and or/sludge (FFS) from said free surface to said location.

In any variant of the method according to the invention, the effluent may be pre-treated by DAF (dissolved air flotation).

In a first embodiment, apparatus according to the invention for removing floating floc and/or foam and or/sludge (FFS) accumulating on a free surface of an effluent containing an aqueous phase comprises suction means for removing said floating floc and/or foam and or/sludge (FFS). The apparatus may also comprise a region in which the effluent may be accommodated, said region being substantially free from turbulent flow so that particles in suspension contained in the effluent are free to rise towards said free surface of the effluent to form said floating floc and/or foam and or/sludge (FFS).

In a second embodiment, apparatus according to the invention for treating effluent containing an aqueous phase and particles in suspension comprises:
(a) a region in which the effluent may be accommodated, said region being substantially free from turbulent flow so that the particles are free to rise towards a free surface of the effluent to accumulate in the form of floating floc and/or foam and or/sludge (FFS); and
(b) suction means for removing said floating floc and/or foam and or/sludge (FFS) accumulating on said free surface of the effluent. Said suction means suitably also serves to establish a reduced (less than ambient atmospheric) pressure to which said free surface of the effluent is exposed.

In a third embodiment, apparatus according to the invention for treating effluent containing an aqueous phase and particles in suspension comprises:
(a) a region in which the effluent may be accommodated, said region being substantially free from turbulent flow so that the particles are free to rise towards a free surface of the effluent to accumulate in the form of floating floc and/or foam and or/sludge (FFS); and
(b) means for establishing a reduced (less than ambient atmospheric) pressure at the free surface of the effluent so that the migration of the particles to said free surface is encouraged.

The apparatus according to this aspect of the invention preferably comprises means for removing floating floc and/or foam and or/sludge (FFS) accumulating on said free surface of the effluent, said means for removing floating floc and/or foam and or/sludge (FFS) suitably comprising suction means, and said suction means may again also serve to establish said reduced (less than ambient atmospheric) pressure to which the free surface of the effluent is exposed.

In an advantageous construction of the invention, the apparatus may comprise a plurality of regions in which the effluent may be accommodated, each of said regions being substantially free from turbulent flow, means for establishing a reduced (less than ambient atmospheric) pressure at the free surface of the effluent in at least one of said plurality of regions, and means for further treatment of the effluent between at least one of said plurality of regions and a subsequent said region. Said means for further treatment of the effluent may effect oxidation or ozonation.

The apparatus according to the invention suitably comprises means for intermittent removal of residual floc and/or foam and or/sludge (FFS) remaining in said effluent and accumulating by settlement towards a lower part of the or each said region substantially free from turbulent flow, while it may also comprise means for pre-treatment of the effluent so that the particles are at least in part oxidised or otherwise adapted for upward migration towards said free surface when accommodated in a said region substantially free from turbulent flow.

Said means for pre-treatment of the effluent may effect electroflocculation, a unipolar electric potential preferably being applied to the effluent to effect said electroflocculation, or said means for pre-treatment of the effluent may effect oxidation.

Said means for pre-treatment of the effluent may effect said oxidation by entrapment of gas in the effluent prior to the effluent being accommodated in a said region substantially free from turbulent flow, or by release of gas into the effluent within at least one said region substantially free from turbulent flow.

The apparatus according to the invention may comprise means for enabling substantially continuous inflow of effluent to at least one said region substantially free from turbulent flow, or alternatively for enabling intermittent inflow of effluent to at least one said region substantially free from turbulent flow, said means for enabling intermittent inflow inflow of effluent effecting for example, initial direction of said inflow to one of a plurality of regions substantially free from turbulent flow and subsequently diverting said inflow to another said region.

The apparatus according to the invention preferably comprises means for accumulating floating floc and/or foam and or/sludge (FFS) removed by said suction means for disposal at a location remote from the or each said region substantially free from turbulent flow.

Said suction means may be effective at a location disposed at a level higher than that of said free surface of the effluent, said location being in communication with said free surface for the purposes of gas flow and uplift of said floating floc and/or foam and or/sludge (FFS) from said free surface to said location, or alternatively, at a location disposed at a level lower than that of said free surface of the effluent, said location being in communication with said free surface for the purposes of gas flow and transfer of said floating floc and/or foam and or/sludge (FFS) from said free surface to said location.

In a favoured embodiment of the apparatus according to the invention, said suction means may be selectively effective either at a location disposed at a level higher than that of said free surface of the effluent and/or at a location disposed at a level lower than that of said free surface of the effluent, each of said locations being in communication with said free surface for the purposes of gas flow and uplift of said floating floc and/or foam and or/sludge (FFS) from said free surface to said location.

Finally, apparatus according to any embodiment of the invention may comprise DAF (dissolved air flotation) means for pre-treatment of the effluent.

Other advantages and features will become apparent from the detailed description of the invention which follows.

### Brief Description of the Drawings

Figure 1 shows a general flow diagram of one embodiment of the process or method of the present invention, with generalised sections 100 to 800 identified, these being described in more detail with reference to Figures 2 through 7.
Figure 2 shows detail of the electrocoagulation/ electroflocculation reactor(s) 101, in section 100 of Figure 1.
Figure 3 shows a detailed block diagram of the power supply 102 for the reactors in section 100 of Figure 1.
Figure 4 shows detail of diffusion, aeration and oxidation in section 200 of Figure 1.
Figure 5 shows detail of the floc/foam/sludge (FFS) reaction and separation chambers for sections 300 and 600 of Figure 1.
Figure 6 shows detail of the FFS vacuum handling systems and receiver for sections 400, 700 and 800 of Figure 1.
Figure 7 shows detail of the oxidation section 500 of Figure 1.
Figure 8 shows an alternative reaction and separation chamber for use in sections 300 and 600 of Figure 1.
Figure 9 and 10 show the use of reduced pressure for floc removal in a DAF system in schematic end and top views respectively.
Figure 11 shows a diversity of possible schemes according to the invention in block diagrams, Figures 11a to 11h.

### Detailed Description of the Drawings

According to the invention, an improved method of, and apparatus for, separating and removing contaminants from an optionally continuously flowing aqueous source or stream are provided as now described with reference to the accompanying drawings. These methods suitably incorporate electrocoagulation and electroflocculation. The invention is also applicable in a discontinuous flow environment, as explained further below.

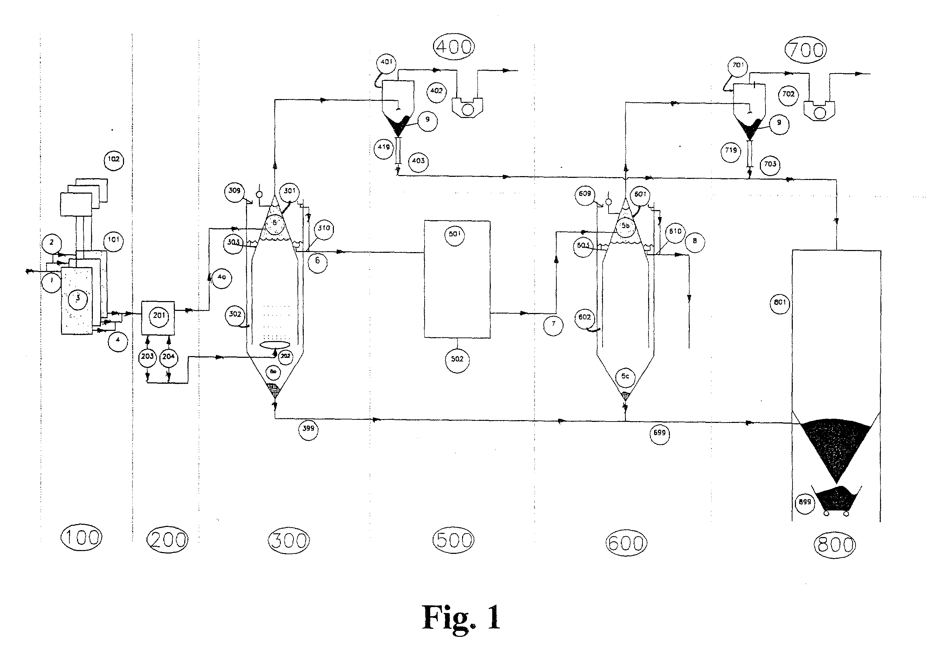

Figure 1 shows a flow diagram of a method according to the invention for separating and removing contaminants from a continuously flowing aqueous source or stream containing contaminants. Referring to Figure 1, aqueous stream 1 with entrained contaminants 2 enters reactors 101, where contaminants 2 are separated into particle flocs 3 from the aqueous phase via electrocoagulation and electroflocculation. The process of electroflocculation is well established. An electric current is passed through the aqueous solution containing the contaminants, and the contaminants are oxidised or otherwise degraded to form a separable floc of oxidised particles. Thus the contaminants 2 separated out of the contaminated stream 1 in the reactors 101 together provide an outflow 4 consisting of a floc 3 and an aqueous fraction or portion or phase which has been decontaminated to at least a significant extent. Direct current is supplied to the reactors via one or more power supplies 102.

The floc/water stream 4 leaving reactors 101 may be subjected to aeration 203 or oxidation 204 via injection system 201 prior to entering floc removal chamber 301 via line 4a. Alternatively or in addition, flow 4a may be subjected to diffusion 202 upon entering chamber 301.

Chamber 301 is defined within an inner shell of generally cylindrical shape, which is open at its lower end and substantially closed by an upwardly tapering conical portion at its upper end. Foam, floc and sludge (FFS) 5 is collected in floc removal chamber 301 at its upper conical substantially closed end and removed via vacuum system 400. Inner shell 301 is surrounded by a likewise cylindrical outer shell to define a chamber region 302 between the inner and outer shells. Chamber 302 is substantially closed at its base by a downwardly tapering portion and is open at the top. Water travels initially downward out of chamber 301 at its open lower end into the surrounding generally annular chamber 302, having had the majority of solids 5 removed in a manner to be described. Any small remaining amounts of floc 5a, if present in the water flow, will collect at the bottom of chamber 302 for removal to hopper 801 via sludge line 399, 699. Treated water then travels upwardly through annular chamber region 302 after passing around the lower peripheral edge or lip or rim of the inner shell and exits annular chamber 302 at its upper open end over weir 303. The exiting stream 6 may optionally be subjected to oxidant 502 in oxidation chamber 501.

Upon leaving optional oxidation section 500, the treated stream, now identified by reference 7, has further FFS collection at 5b; this removal stage is effected in chamber 601 by vacuum system 700. Chamber system 601, 602 is substantially identical to chamber features 301, 302 in the 300 section. Treated water travels downward out of chamber 601 into outer annular chamber 602, then travels upwards through the annular outer chamber portion and exits chamber 602 at its open upper end region over weir 603. The output flow 8 is now substantially suitable for discharge to the outside environment. Small amounts of floc 5c may again collect in the bottom of chamber 602, generally in very small quantities at this stage, for removal via sludge line 699. Floc sludge 9 collected in vacuum tanks 401 and 701 is also periodically discharged into hopper 801. It may subsequently be disposed of by any suitable means, for example by a cart 899.

Figure 1 describes an example of an overall system having a multiplicity of features, not all of which are essential. The various stages and sections may be deployed in a diversity of combinations and subcombinations as described further below.

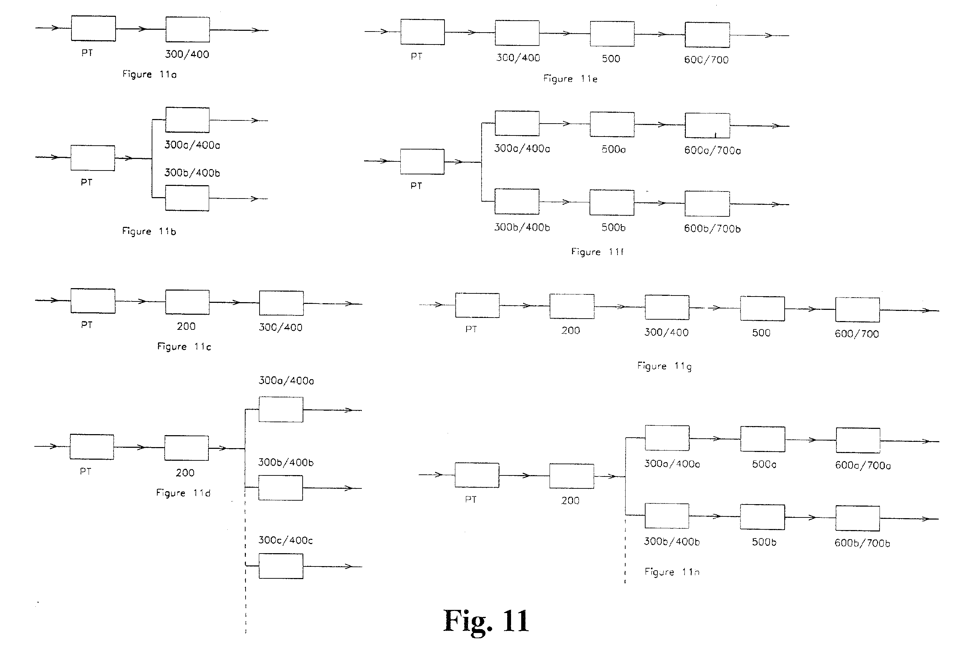

The various sections are now described in more detail, while various alternatives of the manner of deployment of the system are then identified in schematic outline, Figure 11.

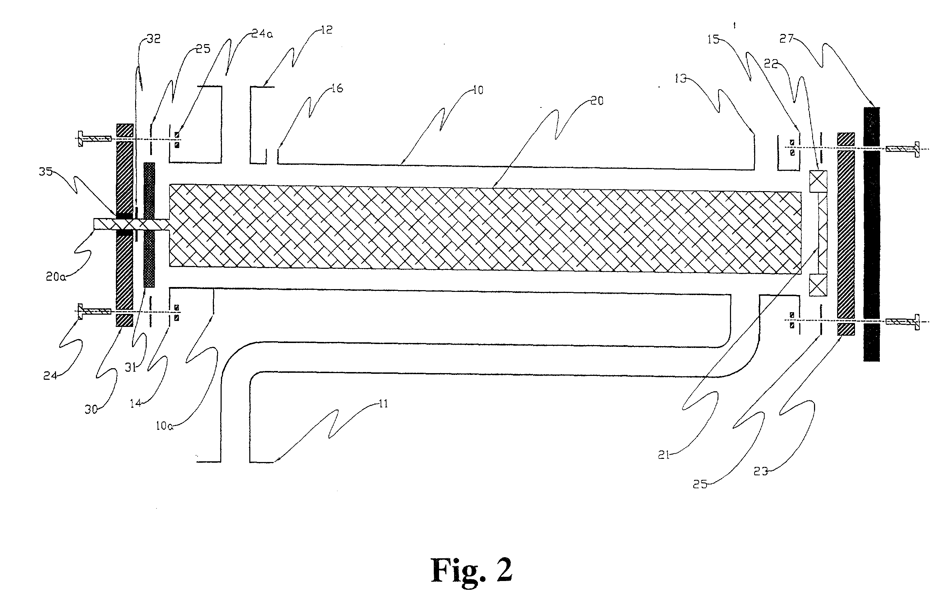

Figure 2 shows details of the reactors 101 from section 100 of Figure 1. Each reactor 101 consists of a generally cylindrical tank 10 made of a suitable material, such as "316" grade stainless steel, and has suitably flanged piping connections for inlet 11 at the lower end and outlet 12, both at the upper end of tank 10. The tank is shown in a horizontal orientation in Figure 2. In its normal operating disposition, the left-hand end as seen in the drawing will be uppermost. A temperature sensing port 16 is welded to the tank 10 in its upper end region in the general vicinity of the outlet 12. A cleanout port 13 is provided towards the bottom of the tank 10. The inlet connections 11 and 12, and the ports 13 and 16, are located on the external periphery of the cylindrical tank wall. Welded to the top of tank 10 is a flange 14. An identical flange 15 is welded to the bottom of tank 10. An electrical connection lug 10a is further welded to the exterior of the tank 10 near the top in the vicinity of flange 14. Lug 10a extends outwards from the external periphery of the tank wall.

Within the chamber is a consumable electrode 20 made of aluminium, preferably of a high grade of purity such as "1098" or "1350", or formed from another suitably conductive material. One end of electrode 20 has a connection post 20a, which may also be of aluminium or another suitable conductive material. Electrode 20 is of elongate cylindrical configuration and is aligned with the axis of symmetry of the reactor vessel 10 in the installed position of the electrode. Post 20a is of reduced diameter compared with the diameter of the major length of the electrode and projects axially from the end face of the electrode in the installed orientation of the electrode.

The bottom of electrode 20 is insulated from tank 10 via a circular disc 21 of suitably insulating material. This disc 21 has an annular centring ring 22 attached to it to surround the periphery of the disc 21. The annular ring 22 serves to maintain the electrode 20 in the geometrical centre of tank 10. Thus the electrode is aligned along the axial centre line or axis of symmetry of the generally cylindrical tank 10. The disc 21 and ring 22 are held in place by blind flange 23, which is in turn held on to tank flange 15 by bolts 24 and nuts 24a. An annular gasket 25 is located between flange 23 and flange 15 to provide a liquid seal. Base end plate 27 made of suitably insulating material provides means for electrical isolation of the reactor as a whole along with rigid mounting.

The top of electrode 20 is geometrically centred to tank 10 via circular stainless steel disc 30, which has a central aperture to accept reduced diameter electrode post 20a which extends in axial continuation of electrode 20 along the central axis of the electrode, and to accept also a surrounding annular insulating bushing 35. An annular insulating ring 31 associated with stainless steel disc 30 and also surrounding post 20a provides electrical isolation for the top of electrode 20 in the immediate vicinity of post 20a. A seal 32 is provided between the circular stainless steel disc 30 and the ring 31. The circular stainless steel disc 30 is secured to flange 14 by bolts 24 and nuts 24a, or by other suitable fastener pairs or fastener arrangements. An annular gasket 25 is provided between the circular stainless steel disc 30 and flange 14 to provide a liquid seal. The seal 32 between the circular stainless steel disc 30 and the ring 31 also compresses when bolts 24 and nuts 24a are tightened, providing a further leak-proof liquid seal. Bushing 35 is formed from suitably insulating material to provide electrical isolation of post 20a from disc 30.

Electrical connections are made to post 20a (electrical positive) and to connection lug 10a (electrical negative).

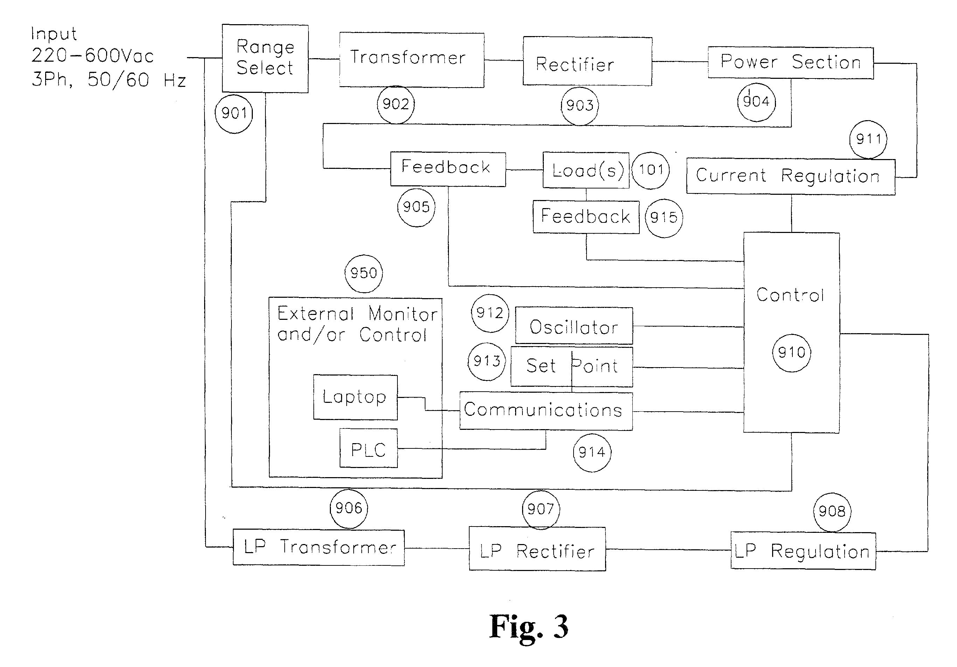

Referring now to Figure 3, power supply means are disclosed for providing power to reactors 101. The power supply is capable of handling not only the variations in conductivity that may be encountered, but also the load variation inherent in the reactor as the electrode is consumed. The three-phase input to transformer 902 is range selected via block 901 under control of control block 910. The output from transformer 902 is rectified by rectifier block 903. Power section 904 delivers the appropriate direct current, controlled by current regulation block 911 modulated by control block 910, to load 101, i.e. the reactor or reactors. Feedback blocks 905 and 915 provide verification of delivered load current to control block 910; any deviation from set point 913 produces instantaneous adjustment via control block 910 and current regulation block 911. Provision for superimposed injection on the DC of waveforms having varying amplitude, frequency and shape is provided to control block 910 via oscillator block 912. Block 914 allows two-way communication between the power supply and external controls 950. Power to operate blocks 910 through 914 is realised by low power transformer, rectifier, and regulation blocks, 906, 907 and 908 respectively.

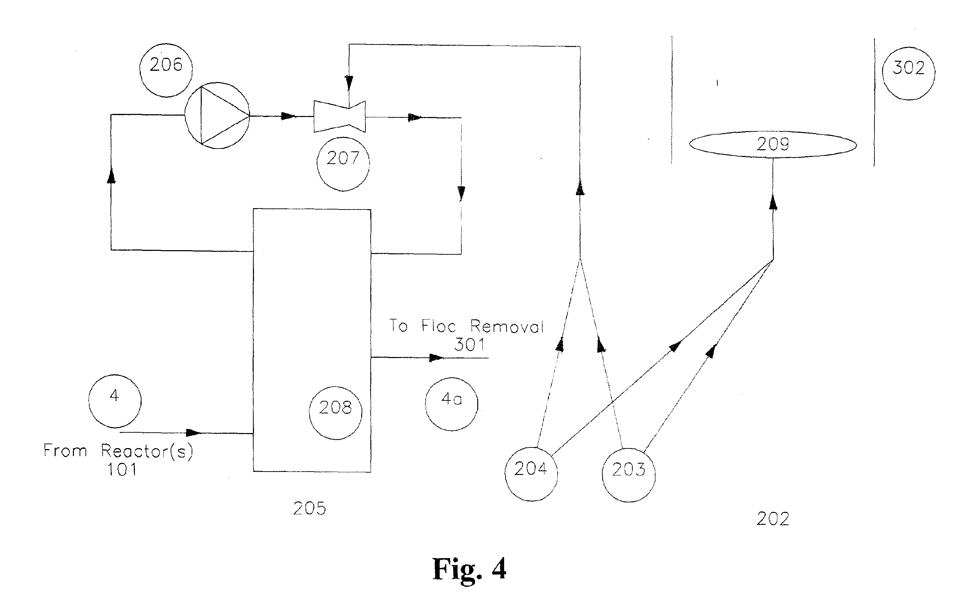

Figure 4 describes the steps of diffusion, aeration and oxidation of the aqueous source or flow, according to the method of the present invention, section 200 of Figure 1. This may include the generation of basic aeration products 203, such as compressed air or oxygen, or oxidation products 204 such as ozone. Other gases such as chlorine and bromine may also be used, but these are less preferred because of the complexities introduced by their use. The aeration products may be entrained into floc/water stream 4 using suitable oxidation means, including for example injection 205 via pump 206, injector 207 and circulation tank 208, prior to stream 4 entering removal chamber 301. Alternatively, aeration products 203 or oxidation products 204 may be introduced into the bottom of chamber 301 by suitable oxidation means using pressure diffusion at location 202 (Figure 1), via suitable ceramic, plastic, or metallic diffusers 209.

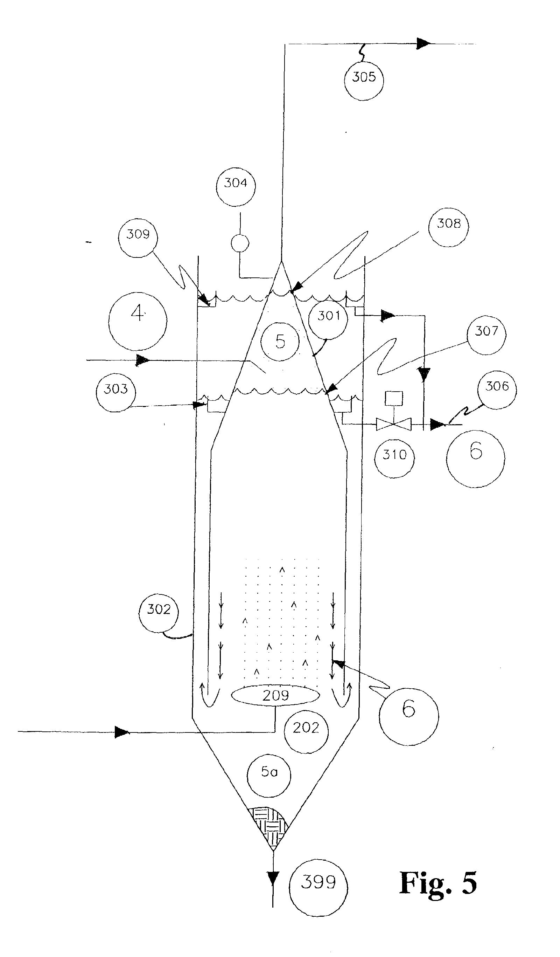

Reference is now made to Figure 5, where details of the foam, floc, and sludge (FFS) reaction and separation chamber 301 are disclosed. The chamber has an inlet suitable for receiving a substantially continuous inflow of aqueous phase (liquid) and floc from the previous stage. As this floc-laden liquid 4 enters the separation chamber 301, the entrained gases generated during the initial treatment in the electrocoagulation/electroflocculation reactors 101 and/or introduced into the flow in the aeration section 200 cause flotation of the floc particulate 5. This particulate becomes entrapped by foam inside the generally closed upper conical part of chamber 301, and the build-up of this floc-laden foam will increase as further floc forms, agglomerates, and is brought to the surface by the gasification introduced prior to its entry into chamber 301, with possible additional gas-induced flotation resulting from the optional diffusion aeration 202 at the bottom of chamber 301. Because of the flotation of the particulate floc 5, via the combined effects of diffusion aeration and entrained gas release, the vast majority of particulate 5 is separated from the water in the form of foam. Clear water 6 travels downward through chamber 301, which is generally coaxially disposed within tank 302 as shown. The slow, turbulence-free path taken by clean water 6 downward through chamber 301, out through the open lower end of chamber 301, and then upward again through the annular region external to chamber 301 defined by surrounding sleeve-like tank 302 ensures that only minute quantities of floc particulate will gravitate downward and form small amounts of sludge 5a at a settlement location, i.e. the generally conical closed bottom of tank 302. This sludge may be removed (extracted) periodically via sludge line 399. Clear water 6 then spills over weir 303 which extends in annular manner around the outside of chamber 301 in its upper inwardly upwardly tapering conical top region, and exits via suitable piping 306. This weir 303 suitably comprises an annular substantially trough-like feature extending also around the inner periphery of tank shell or cylinder 302 between outer shell 302 and inner shell 301, but mounted on and extending from the upper end wall of tank 301. At least the substantially cylindrical portions of inner and outer shells 301 and 302 are substantially coaxial and their concentric axes of symmetry are aligned substantially vertically.

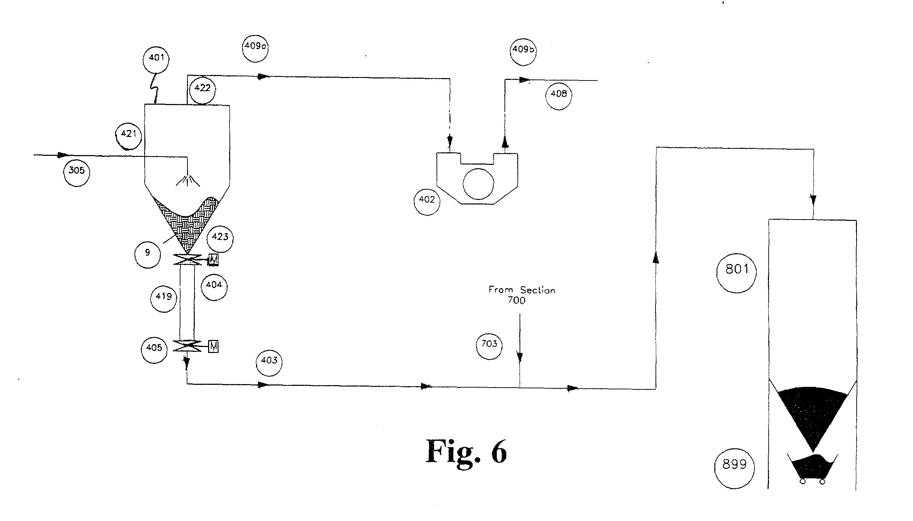

A constant reduced pressure (tending towards a vacuum) is maintained in closed-top chamber 301 by sensitive electronics 304 acting to vary the suction applied. This suction is developed by means for applying reduced pressure which, in the exemplary embodiment, is effected via a small diameter suction line 305 communicating between the top of chamber 301 and vacuum pump 402 of section 400, Figure 6. Appropriate selection of the rating of vacuum pump 402 and suitable sizing of chamber 301 relative to the volume flow of stream 4 and the quantity of gases produced by reactors 101 and optional diffusion 202 or injection 201 results in relatively 'dry' foam made up mostly of floc particulate 5 and gases and results in a substantially constant internal water level 307 being maintained in closed-top chamber 301. The internal diameter of suction line 305 is selected such that the velocity of the particulate foam and gases through it is very high, resulting in the gases becoming separated from the particulate prior to exiting at the other or exhaust end. The reduced pressure applied to the floc-bearing liquid surface effectively removes the floating floc by sucking it from the top exposed surface of the liquid through the suction line 305. The use of a reduced pressure to remove the FFS material from the top surface of the liquid has significant advantages over prior art systems. In particular, it enhances the rate of accumulation of foam at the upper end of chamber 301 so that the volume of foam developed from the rising floc is substantial. Secondly, it does not require the use of additional liquid for reducing removed foam. Thirdly, since the reduced pressure effectively removes gas from the foam as it travels from the chamber 301 along pipe 305, the footprint of the overall waste treatment system is significantly reduced.

Prior to anticipated idle periods when the system is to be inactive, system control electronics command valve 310 to close, i.e. the valve of the normal exit line 306 from chamber 302 for water spilling over weir 303. This results in the level of the water in chamber 302 rising to level 308 and spilling over an upper weir 309 where it exits via suitable piping connected to piping 306 downstream of valve 310. Weir 309 is again an internal annular trough extending around the inner periphery of tank 302, but at a higher level than trough 303, and extending inwardly from and mounted on the inner side of the substantially cylindrical wall of outer shell 302.

This "suction level adjustment" ensures that most of the particulate is removed from chamber 301 prior to shutdown. The remainder will either remain on the top of the water, while if any does sink, it is collected in the bottom of tank 302 for removal. During this flushing action, the water level within closed-top inner tank region 301 rises also, along with that in outer chamber 302, to at least the level of weir 309, so that the free region within the cone but above the liquid level is reduced in volume, and any residual floc/particulate is essentially forced out of chamber 301 through line 305. The remaining undischarged or unflushed-out solid material will be substantially trivial in quantity. Alternative purging arrangements are feasible, for example, reverse pressurization, but the method described is technically simple and elegant, while being particularly effective in achieving the desired objective.

Referring to Figure 6, details of the FFS vacuum handling system(s) and receiver are now disclosed. Vacuum tank 401, which acts as a discharge location, is constructed to withstand an internal vacuum of up to -2 bar and is of generally cylindrical shape with a downwardly tapering or sloped conical bottom, the axis of symmetry of the tank being substantially vertical. In one embodiment, the sides of the cone are at 60 degrees to the perpendicular, but it will be apparent that alternative dimensions and proportions may be used for tank 401. Tank 401 has three ports, 421, 422 and 423. Suction line 305 which communicates with the top of floc chamber 301 in Figure 5 is connected to port 421. This small diameter pipe enters tank 401 through the sidewall and bends downward at approximately 90 degrees such that it discharges in the geometric centre of tank 401, i.e. aligned with the tank axis of symmetry. Sludge line 403 is connected to tank base port 423 through valves 404 and 405. The sludge line acts as a means of transferring the removed floc to a disposal location. The other end of sludge line 403 is connected to sludge line 703 from the second sludge removal stage 700 and the combined sludge line continues then to a discharge location, which in the present case is a sludge hopper 801. Port 422 is located at the top of vacuum chamber 401 and connected to the suction port of vacuum pump 402.

Suction 409a from vacuum pump 402 is applied to the top of vacuum tank 401 and gases drawn from chamber 301 are removed from vacuum tank 401, for discharge, suitably to atmosphere, at location 409b, out of pipe 408. The removal of these gases releases floc particulate 5 at high velocity as the flow of gas and floc exits pipe 305 inside tank 401, and the particulate collects in the bottom of tank 401 as sludge 9. Thus the suddenly degassed particulate accumulates within tank 401 and there is substantially no carry-over of sludge in the exiting gas stream.

At suitable intervals, system control electronics cause valve 404 to open, allowing accumulated floc sludge 9 to drop into chamber 419. Valve 404 then closes and valve 405 opens, allowing the accumulated sludge 9 to drop out of chamber 419 for onward movement or advance through sludge line 403 into hopper 801 for subsequent disposal. This alternating action of valves 404 and 405 ensures that the treatment process is not halted at any time, and enables substantially continuous batchwise removal of FFS to be accomplished. The arrangement 404, 419, 405 thus operates in the manner of an airlock. There is no interruption in the vacuum-driven separating action effected in chamber 401, from which gas and sludge exit via different paths.

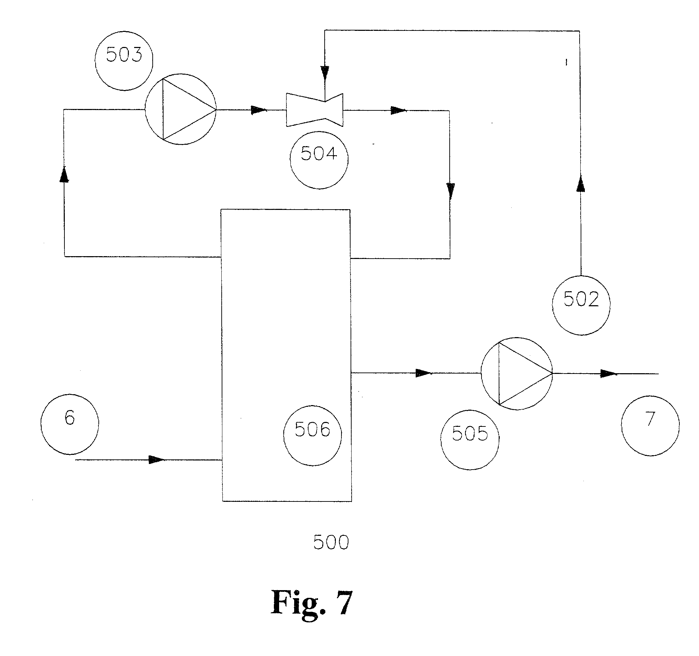

Referring to Figure 7, details are disclosed of the optional oxidation section 500 of Figure 1. A substantially clear, solids-free water stream 6 enters contact vessel 506, where it is subjected to severe turbulence due to the action of pump 503 and venturi 504. Pump 503 draws water 6 from tank 506 and pumps it through venturi 504 under a pressure of between two to four bar. Pressure at the outlet of venturi 504 is nominal atmospheric, and this pressure differential creates a suction that draws in oxidant 502. Oxidant 502 may be ozone or oxygen, and the fine bubbles of oxidant oxidise dissolved remaining contaminants in stream 6. The outlet of the venturi 504 returns this oxidised stream back into tank 506. This action creates severe turbulence and mixing of oxidant and water stream 6 within tank 506.

The process of oxidising dissolved contaminants in stream 6 creates particle floc 5b separate from the aqueous phase. This floc-laden stream 7 exits tank 506 and is pumped via pump 505 to floc separation section 600. Section 600 operates similarly to section 300 but without aeration/oxidation/diffusion. Weir 609 and valve 610 operate in substantially the same manner as weir 309 and valve 310 of section 300 for flush-out on shut-down. Section 700 provides floc removal means similar to section 400, with vacuum pump 702 and chamber 719 operating in substantially the same manner as pump 402 and chamber 419 in section 400.

Treated water 8 from section 600 is suitable for discharge to even the most demanding license requirements. However, in the case of especially severely polluted aqueous streams, further electrochemical or oxidation treatment stages may be required. Preferably, however, the existing process steps are adjusted to get the desired results; for example, higher current, more reactors, more oxidant, or better gross solids removal pre-process, rather than resorting to the addition of further technical features. This results in fewer pumps, tanks and equipment, and therefore lower installed cost, not to mention a lesser space requirement.

Balance tanks and large particle separation prior to entering the process may be further provided, but are not described herein. Such prefiltering may be desirable to ensure proper functioning of the reactors by restricting or limiting their activity to particles too small to be trapped by conventional mechanical filtering.

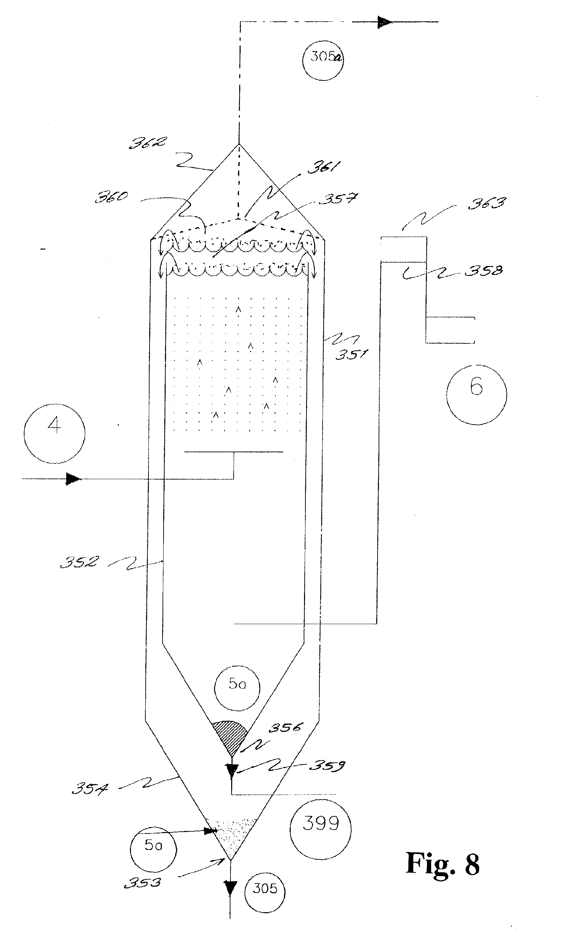

Figure 8 shows an alternative construction of the separating tanks used in stages 300 and 600. Again, the separating arrangement consists of two substantially concentric outer and inner generally cylindrical vessels 351 and 352 respectively, oriented with their substantially coincident axes disposed substantially vertically, one vessel (352) being completely enclosed within and surrounded by the other vessel (351). Thus the outer vessel (351) comprises a type of sleeve. In the arrangement shown in Figures 1 and 5, the inner vessel 301 is closed at the top and open at the base. Floc in the formed foam accumulating on the surface of the liquid within the inner vessel 301 is sucked away at the closed top end and the free liquid surface within this substantially closed vessel region is subjected to a reduced pressure on its upper surface. This reduced pressure accelerates the migration of gasified particulated contaminants in the floc/water inflow to the free surface within the closed inner vessel top region. This migration provides especially effective separation of contaminants from the aqueous phase. Substantially clear water then flows outwards at the open lower end of the inner vessel 301 and upwards within the open-topped outer shell 302, in the annular space between shells 301 and 302, for discharge over a weir arrangement 303 in the upper end region of the open outer shell 302. Any sludge 5a accumulating within this outer vessel is drawn away at the base via line 399.

In the alternative arrangement shown in Figure 8, the outer vessel 351 is fully closed against the external environment and vacuum is pulled at the lower end 353 of the outer vessel, which is provided at its lower closed end region with an inwardly tapering conical end section 354. The vacuum is applied via line 305 substantially at the lower apex of this conical section. This outer vessel 351 is also closed at the top, to enable the reduced pressure to be established by the system of the invention in this variant and created via line 305 connected at the base 353 of the chamber 351 to be maintained within and throughout the chamber. The inner vessel 352 is now open-topped, but is completely enclosed by the closed-ended sleevelike outer vessel 351. Inflow from line 4 takes place approximately midway along the height or length of the inner vessel 352 from its lower end 356 towards its upper open end 357. Draw-off of separated aqueous phase, substantially decontaminated from the majority of larger contaminating particles, takes place at this lower level 356 within this tank 352, below the inflow location from line 4. The free surface of the liquid within this open topped tank is maintained at a level a short distance below the upper edge 357 or rim or peripheral circumference of the open-topped tank 352 by means of a siphoning inverted U-bend, schematically indicated at 358. The lower end region 356 of the open-topped inner tank 352 is again conically tapered in a downward direction and terminates at a sludge release valve 359 at the apex of this inner cone 356. Sludge draw-off may take place by sludge being intermittently released from the inner apex 358 to sludge line 399, as per Figures 1 and 5. Alternatively, sludge from inner apex 358 may be released to outer apex 354 and sucked away via line 305. This alternative provides an especially neat and simple solution to the problem of sludge collection, in that all sludge collection is then routed by the vacuum sections 400 and 700. No additional lines are required, as compared with sludge draw-off by the separate line from the bottom apex 356 of the inner tank 352.

For the arrangement of Figure 8, the operation is such that FFS builds up on the surface 357 of the aqueous phase in inner tank 352. Because the level of the liquid in this tank 352 is just below its lip or edge, the foam accumulating on the liquid surface 357 spills over the edge and falls through the annular gap between tanks 351 and 352 to the conically inwardly and downwardly tapering region 354 of outer shell 351. This spillover action and downward movement of the FFS is encouraged by the vacuum at the base region 354 of tank 351.

In alternative constructions, the arrangement of Figure 8 may be further modified. In particular, the outer vessel need not necessarily be fully closed in all variants. It is not essential to the system and method of the invention that this vessel be fully closed in all embodiments. Thus it is not in all circumstances necessary to maintain a vacuum in the outer vessel and it may suffice merely for vacuum or reduced pressure to be applied at line 305 to effect sludge evacuation, without the top of the vessel being sealed. Thus in this variant, the suction action operates in the manner of a vacuum cleaner, which collects waste matter by the action of a negative pressure airflow, without the region from which the waste is uplifted necessarily being fully sealed or isolated from the ambient environment. Whether or not maintenance of vacuum is required will depend on the nature and quantity of the floc/foam/sludge to be handled.

In further variants, vacuum may be pulled at either the top or the bottom of the outer vessel, or at both ends, irrespective of whether or not the vessel is sealed or closed against the external ambience. In either circumstance, vacuum may be pulled intermittently or continuously. The selection of top or bottom vacuum and the continuity or otherwise of the application of vacuum will be again dependent on the nature and quantity of the FFS. The ratio between the magnitude, duration and periodicity of top and bottom vacuum may be varied, again depending on FFS conditions and requirements. An optional top vacuum line 305a is also indicated in Figure 8, which may be provided as an alternative to bottom vacuum line 305 or in addition to pulling vacuum at base 354 of tank 351.

In this manner, provision may be made for so-called "pre-degasification" at the top, before the FFS falls or spills over into the outer tank or vessel. The annular gap or space between the inner and outer tanks or vessels may be varied or adjusted in different embodiments to optimise this action, while also the height or level of the spillover edge of the inner tank may likewise be adapted to the requirements of an individual installation. A higher level edge is indicated by a higher liquid level reference 360 in Figure 8, while an alternative configuration for the upper end of the outer tank is indicated by reference 361. This latter arrangement retains the upwardly tapering cone structure at the top of the tank, but provides a cone of shallower depth than the embodiment 362 identified in full outline. Thus the taper-in of the upper end cone over its height is more rapid in the case of modified construction shown in the dashed line configuration of reference 361 in Figure 8 than the construction 362 indicated in full line.

The manner of functioning of the embodiment of Figure 8 or any of its possible variants is essentially the same as previously described, but the structure is inverted in a mechanical sense. The outer tank 351 is exposed to a reduced pressure and this reduced pressure is therefore present also at the free surface 357 of the liquid and floc mixture as it flows into the inner open-ended tank 352. This reduced pressure on the upper surface 357 of the liquid 6 within the inner tank 352 again encourages migration of gasified floc to the free upper surface 357. This flow of floc to the free surface 357 may be augmented and encouraged by aeration and diffusion within the inner tank 352, as previously described in connection with Figures 1 and 5. However, in this present embodiment, as compared with the arrangement of Figures 1 and 5, instead of the foamed floc being sucked away vertically upwards from the top of the structure, the floc spills over the sides of the inner vessel 352 at its upper edge, falls downwardly through the annular space between the inner 352 and outer 351 shells of the separator tank structure, and is then sucked away at the apex 354 at the base of the structure, rather than from the top. Preferably the diameter of the separator unit, in particular the diameter of the inner open-topped tank 352, is relatively narrow in comparison to the height of the unit, this facilitating the spillover of floc floating on the liquid surface 357 at the top of the inner vessel. Because of the relatively narrow diametral dimension of the inner tank 352 and the encouragement induced by way of the reduced pressure or vacuum, there is substantially comprehensive draw-off of floc from the top of the surface 357 by spillover across the upper edge or rim of the inner tank 352. The development of any central floating residue which persists on the free surface 357 and is not drawn off is substantially minimised. Thus the arrangement avoids significant stagnation in floc flow and removal.

A relatively narrow diameter in relation to the axial length of the units is also a feature of the separating tank embodiments of Figures 1 and 5. Thus in either embodiment, the separating vessels or tanks are of relatively small capacity, thereby facilitating flushing-out of the system and minimizing accumulation of sludge.

In order to provide for complete clearance of floc at intermittent intervals and for purging the system in the event of temporary shut-down, an additional higher level of inverted syphonic U-bend may be provided, as by reference 363 in Figure 8. When it is desired to flush out the system, the valve controlling flow through the U-bend 358 defining the normal operating level 357 of liquid within the inner open-topped tank 352 is closed and the liquid level then tends to rise to the value determined by the higher loop of the auxiliary U-bend 363. In this way, the level 357 rises within the inner tank 352 towards a new equilibrium position which would notionally be higher than the lip or rim of tank 352. The liquid spills over or slops out of the inner tank 352, thereby carrying away all floating foam or floc accumulated on the surface 357. A diversity of possible manners of flushing out the system will be available, depending on the level of the flush-out U-loop 363 relative to the normal operating level 357 for the liquid within the inner vessel 352, and whether and to what extent substantial liquid spillover into the outer vessel 351 is required or acceptable. Appropriate adaptation of the lip or rim of the inner vessel 352 may also be provided to facilitate this flushing-out action.

The arrangement of Figure 8 provides a technically elegant and effective solution to the task of floc and sludge removal with a minimum of complexity.

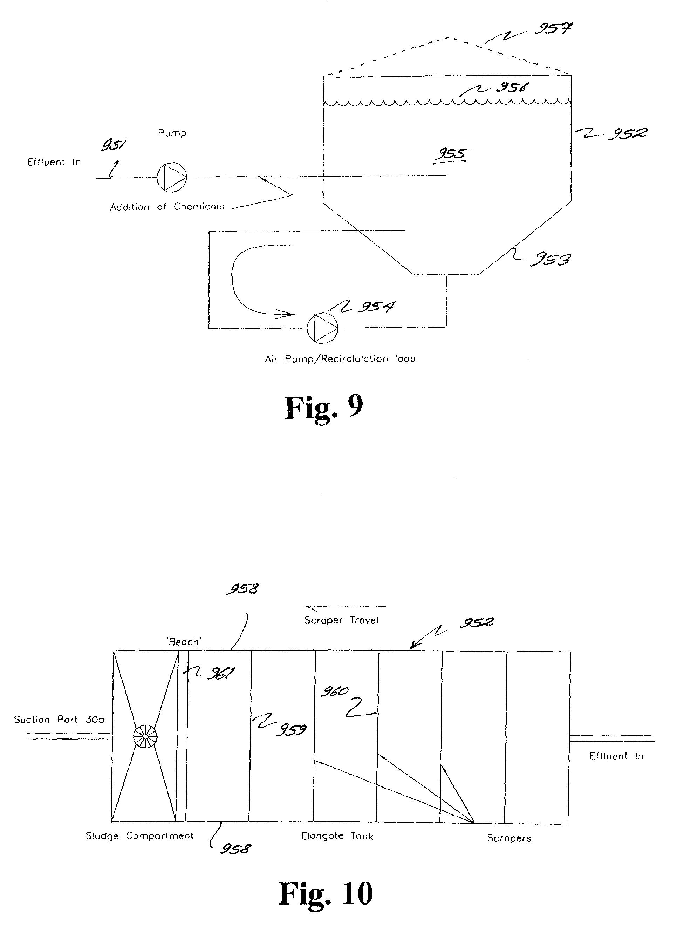

Figures 9 and 10 show application of the reduced pressure principle of the invention to a conventional dissolved air flotation (DAF) system. As shown in Figure 9 in schematic end section, effluent 951 flows into an elongate tank 952 with a truncatedly conically inwardly directed base region 953. The elongate tank 952 substantially equates to a trough with a narrower profile at its base. A pump 954 draws off a portion of the liquid 955 within the tank 952 and recirculates it back into the tank 952 with added air. In this way, oxidation and gasification of suspended solids representing contaminants within the effluent 951 is encouraged, albeit in a relatively crude mechanical manner, and a floc forms and eventually accumulates on the liquid surface 956 within the tank 952. A system of this kind operating with normal ambient pressure acting on the exposed liquid surface 956 in the tank 952 is well known.

According to the invention, the upper region of the tank may be covered over as shown in dotted outline by reference 957 and reduced pressure applied to the liquid surface or area within the closed tank by means of a vacuum pump. The use of this low pressure acting on the surface 956 of the liquid 955 gives significant improvement in the migration of the floc to the surface 956 and in the degassing of the floc.

In a variant of the invention as applied to a DAF (dissolved air flotation) system, the DAF installation may not necessarily be covered over, i.e. cover 957 may be omitted, but the vacuum may instead be applied at the outlet of the DAF arrangement or within a suitable FFS-receiving vessel.

In particular, a DAF system may also take the place of stage 100 in a treatment system incorporating separation and sludge removal features according to the present invention.

DAF systems may also make use of added chemical flocculants or polymers, or the like, as well as air. The principle of the invention may also be applied to a DAF system to replace or supplement such additive measures, for example by incorporation of electrocoagulation (as per section 100 of Figure 1) and/or entrainment of oxidant (as per section 200 of Figure 1). Such optional electrocoagulation and/or oxidation steps may be applied in addition to vacuum removal of particulate foam/floc/sludge, whether this is effected by conventional means or in accordance with the present invention.

Thus a DAF system based on the principles of the present invention may have a DAF stage as described above followed by separation as per stage 300 of Figures 5 and 8, or a DAF stage as described above may take the place of stage 300 and be preceded by a reactor stage as per feature 100 of Figures 1, 2 and 3.

As shown in the top view of Figure 10, in a conventional arrangement, the lateral sides 958 of the tank 952 are bridged by tie bars 959 and an elongate track runs along each longitudinal edge of the tank 952 on which there travels a scraper unit 960 which pushes floating accumulated floc to a beach 961 at one axial end of the trough 952. The improvement of the invention may be applied in the beach region 961 by suction uplift of FFS when such mechanical collection of floc is effected by means of a mechanical scraper 960, or alternatively, the dissolved air flotation trough unit 952 may be incorporated as a pre-treatment step in a modified arrangement acting similarly to that described in connection with Figure 8, in which there is spillover of floc and bottom removal of the floc. It is a particular advantage of the use of a reduced air pressure on the liquid surface to which the floc rises that not only is migration of the floc encouraged, but there is significant degassing of the floc during its withdrawal from a separation chamber or region and its collection at a sludge location. Thus the floc is significantly densified during this stage, leading to greater efficiency in sludge disposal. The system of the invention also reduces liquid carryover along with the floc, in that there is significant drying action taking place within the floc during its withdrawal from the free liquid surface within the separator vessel or other sludge retrieval location. This drying action is effective irrespective of the location of the vacuum or suction withdrawal, whether at the top or at the bottom of a separator vessel, or elsewhere. In the case of the spillover arrangement of Figure 8, it will be appreciated that there is however greater opportunity for drying of the floc during its downward travel through the annular space between the shells 351, 352 of the separator unit to the withdrawal location at the base, but as against that, drying by separation of entrained liquid is gravity-assisted when floc withdrawal takes place at the upper end of a separator as per Figure 5.

In further regard to drying of the floc, it is also to be noted that this is enhanced by virtue of the gap or spacing or distance between the free liquid surface on which the floc forms and accumulates by flotation and the suction exit, whether this is at the top of the vessel or the bottom of the vessel. The drying action is encouraged by liquid remaining within the foamed floc falling out of the floc during its transit to the suction exit. This is especially the case where such separation is favoured by gravity, as in the top removal of Figures 1 and 5. A similar effect also prevails however in the inversion of Figure 8.

Figure 11 shows a diversity of possible arrangements of the invention in a series of schematic diagrams. Not all of the stages shown in Figure 1 are essential for use of the invention in its most basic aspect. A significant feature however of the invention in at least one its aspects is the initial pre-treatment of the inflowing contaminated effluent and the application to the resulting floc and aqueous phase mixture of a separating stage. In this separating stage, a free surface of the floc/water mixture may be exposed to reduced pressure. These features of the invention are common to all combinations of stages. The invention may be used in both continuous flow and batch flow arrangements, as will be described below. The preferred suction system for developing the reduced pressure applied to the surface of the initially treated contaminant may also be used for removal of the floc, although other options are also feasible, and floc removal may be effected by other arrangements in alternative embodiments within the ambit of the invention.

Figure 11 a shows the invention in its most basic format, with pre-treatment stage PT and a single separating stage 300 with associated vacuum stage 400. In this arrangement, the effluent may treated in a set of reactor units, each unit being as per a unit 100 of Figures 1, 2 and 3. In any arrangement of the invention, the number of such reactor units may vary from two or four up to as many as thirty-two. In stage 300, floc rises to the surface of the floc and aqueous phase mixture and in a preferred embodiment is drawn off by suction. There is a natural tendency for the gasified particles emerging from the pre-treatment stage PT or reactor stage 100 to rise to the free surface in stage 300, but this natural tendency to migrate upwards is greatly encouraged by the application of reduced pressure as described in connection with the present invention. The use of reduced pressure and suction means also provides an effective arrangement, used in the preferred embodiments, for removal of floc in a largely dried and densified condition. Residual floc and any non-gas-trapped solids accumulate at the bottom of the separating unit 300, at the base of the vessel containing the water phase, and are drawn off intermittently as previously described. The arrangement shown in Figure 11a is all that is required if only the removal of suspended solids is in question.

Referring now to Figure 11b, an arrangement is shown which is especially suited to batch treatment. It will be appreciated that while the arrangement of Figure 11a and the embodiments described in respect of earlier figures, especially Figure 1, are particularly well adapted to continuous flow, the arrangement of Figure 11a could also be used for batch treatment. In other words, effluent could be run into the system until the treatment stage 300 is full, and inflow then terminated until separation has been completed. However, the arrangement of Figure 11b allows continuous inflow with batch treatment at the separating phase by providing two side-by-side separating vessel arrangements 300. Inflow is continuous through pre-treatment stage PT, so that reactors representing stage PT may operate effectively on a continuous basis. Batch treatment takes place however at stage 300, where one of the vessels defining a respective stage 300a is first of all filled up, and inflow is then directed to the second set of vessels comprising the other separating stage 300b. Separation is completed in the first unit 300a and the unit discharged, with clearance of both floc and treated aqueous phase, while inflow continues to the second unit 300b. The separating stages are then switched over so that inflow can be again directed to the first separating system 300a, while the completion of separation and the draw-off of floc, sludge and decontaminated aqueous phase takes place from the second 300b of the parallel side by side separating units 300a, 300b.

Where more than one stage 300 is used in parallel, each separating stage may have an individual vacuum stage 400 associated with it, or alternatively a single vacuum stage 400 may serve two or more separating stages 300 in the case of batch treatment, as proposed according to Figure 11b. Figure 11b shows each stage 300a, 300b having a respective vacuum stage 400a, 400b, but the latter may be substituted by a single stage 400 serving both separating stages, 300a, 300b.

A similar possibility applies to the repeated separation variant of the invention, in respect of stage 600, as shown in Figures 11f to 11h, where each second separation stage 600a, 600b etc has an associated respective vacuum stage 700a, 700b etc, which could in each case be replaced by a single vacuum feature 700, serving any number of separating stages 600a to 600b.

It will again be appreciated that more than two such second separation units 600 may again be provided in side-by-side parallel arrangement, thereby facilitating continuous inflow with subsequent separation on a batch basis.

Figure 11c and 11d relate to the introduction of the oxidation stage 200 in a system otherwise in accordance with the respective Figures 11a and 11b. Figure 11d again refers to the batch possibility, with two side by side stages 300, optionally also further such stages as indicated in dashed outline, disposed in parallel arrangement for batch separation treatment, such treatment alternating between respective separating vessel structures. The oxidation stage 200 is effected after the pre-treatment stage PT and either before separation stage 300 or during the separation stage. It is possible for oxidation to occur both before and during the separation stage, as described in connection with Figures 1, 4 and 5. Depending on the nature of the contaminated inflow, the gasification resulting from the pre-treatment stage PT may be sufficient to cause floating of the floc in the separation stage 300 and additional oxidation may not necessarily be required. Thus oxidation stage 200 and the associated oxidation input to treatment stage 300 represents an optional possibility within the overall concept of the invention.

Figures 11e and 11f show arrangements in which a second separating stage 600 with associated vacuum stage 700, substantially the same as stages 300/400, is introduced with an intervening again optional oxidation or ozonation stage 500. The additional separating stage and the further gas treatment of the effluent flow is required where disinfection of the effluent flow is necessary or also in circumstances where, even after separation of contaminating particles, the aqueous phase remains discoloured. Both circumstances prevail in for example effluent from a fish plant containing blood contaminants. Even after separation of solid particles in stage 300, the ongoing flow retains a red colouration. By further oxidising treatment and the further separating stage 600, the clear but discoloured supernatant emerging from stage 300, from which all solids have been removed in the first treatment stages, may be treated to become clear to of all discolouration. In the case of fish effluent, not only is the removal of unwanted colouration required but disinfection is also in question, and for this reason the treatment in stage 500 then consists of ozonation. If only decolouration is required without disinfection, then simple oxidation may be all that is required at stage 500.

Figures 11e and 11f omit the oxidation stage 200 before stage 300, whereas the final schematic diagrams of Figures 11g and 11h show all stages 100, 200, 300, 500 and 600, so that there is both oxidation pre-stage 300 and intermediate oxidation or ozonation between stages 300 and 600. Continuous flow (Figure 11g) and batch (Figure 11b) options are once again illustrated.

The distinction between the arrangements of Figures 11e and 11f and those of Figures 11g and 11h are to a degree academic, as plants in which stage 500 is required will most likely also require the use of the first-oxidation stage 200 on account of the nature of the effluent.

Block 100 PT may also take the form of a pre-treatment stage other than a reactor. The invention may be applied to systems having alternative pre-treatments such as DAF, located upstream of delivery of the flow to be treated to the separating system of the invention.

Thus when the present invention is applied to a DAF system, the DAF aspect may in a first arrangement operate in conventional manner with suction collection of FFS at the downstream end. Alternatively, the DAF arrangement may take the place of pre-treatment stage 100 as exemplified in Figure 1 of the present disclosure. In a still further variant of the invention applied to DAF, a DAF system may make use of suction removal of FFS at the downstream end and be associated, at its upstream end, with an advance electro-treatment stage involving electro-flocculation or the like and/or oxidation. Thus a DAF system operating in accordance with the principles of the present invention may also be associated with a pre-treatment stage substantially equating to the preferred pre-treatment described in the present disclosure.

The principles of the invention as elucidated with regard to the different schematic arrangements of Figure 11 represent only some of a multiplicity of possible sequences of system stages. Each stage may also be modified within the concept of the invention, without departing from the overall principle of the present system. In particular, further modification of the separating stages may be effected to achieve the objectives of the invention within the scope of the claims herein set out, while the reactor structure may also be varied within the requirement to provide suitably charged contaminant particles at the appropriate stage of the system. The sludge collection arrangements described may also be subjected to variation, again within the ambience of the invention.

The words "comprises/comprising" and the words "having/including" when used herein with reference to the present invention are used to specify the presence of stated features, integers, steps or components, but does not preclude the presence or addition of one or more other features, integers, steps, components or groups thereof.

## Claims

1. A method for removing floating floc and/or foam and or/sludge (FFS) accumulating on a free surface of an effluent containing an aqueous phase, wherein said floating floc and/or foam and or/sludge (FFS) is removed by suction.

2. A method according to Claim 1, wherein the effluent is accommodated in a region substantially free from turbulent flow so that particles in suspension contained in the effluent are free to rise towards said free surface of the effluent to form said floating floc and/or foam and or/sludge (FFS).

3. A method of treating effluent containing an aqueous phase and particles in suspension, comprising the steps of:
(a) accommodating the effluent in a region substantially free from turbulent flow so that the particles are free to rise towards a free surface of the effluent to accumulate in the form of floating floc and/or foam and or/sludge (FFS); and
(b) removing by suction said floating floc and/or foam and or/sludge (FFS) accumulating on said free surface of the effluent.

4. A method according to Claim 2 or Claim 3, wherein the suction applied to remove said floating floc and/or foam and or/sludge (FFS) also serves to establish a reduced (less than ambient atmospheric) pressure to which said free surface of the effluent is exposed.

5. A method of treating effluent containing an aqueous phase and particles in suspension, comprising the steps of:
(a) accommodating the effluent in a region substantially free from turbulent flow so that the particles are free to rise towards a free surface of the effluent to accumulate in the form of floating floc and/or foam and or/sludge (FFS); and
(b) exposing the free surface of the effluent to reduced (less than ambient atmospheric) pressure so that the migration of the particles to said free surface is encouraged.

6. A method according to Claim 5, wherein floating floc and/or foam and or/sludge (FFS) accumulating on said free surface of the effluent is removed, optionally by suction, and suction applied optionally to remove said floating floc and/or foam and or/sludge (FFS) optionally also serving to establish said reduced (less than ambient atmospheric) pressure to which the free surface of the effluent is exposed.

7. A method according to any of Claims 4 to 6, wherein the steps of accommodating the effluent in a region substantially free from turbulent flow and exposing the free surface of the effluent to reduced (less than ambient atmospheric) pressure are repeated and the effluent is further treated between at least one said step of accommodating and exposing and a subsequent said step, the further treatment of the effluent between said steps optionally comprising oxidation and/or ozonation.

8. A method according to any of Claims 2 to 7, wherein the effluent is pre-treated so that the particles are at least in part oxidised or otherwise adapted for upward migration towards said free surface when accommodated in a said region substantially free from turbulent flow, the effluent optionally being pre-treated by electroflocculation, a unipolar electric potential optionally being applied to the effluent to effect said electroflocculation, and/or the effluent optionally being pre-treated by oxidation.

9. A method according to any of Claims 2 to 8, wherein inflow of effluent to at least one said region substantially free from turbulent flow is substantially continuous, or inflow of effluent to at least one said region substantially free from turbulent flow is intermittent, inflow of effluent optionally being initially directed to one of a plurality of regions substantially free from turbulent flow and subsequently diverted to another said region.

10. , A method according to any of Claims 1 to 4 and 6, or any of Claims 7 to 9 when dependent on any of Claims 1 to 4 and 6, wherein said suction applied to remove said floating floc and/or foam and or/sludge (FFS) is selectively effective either at a location disposed at a level higher than that of said free surface of the effluent and/or at a location disposed at a level lower than that of said free surface of the effluent, each of said locations being in communication with said free surface for the purposes of gas flow and uplift of said floating floc and/or foam and or/sludge (FFS) from said free surface to said location.

11. Apparatus for removing floating floc and/or foam and or/sludge (FFS) accumulating on a free surface of an effluent containing an aqueous phase, comprising suction means for removing said floating floc and/or foam and or/sludge (FFS).

12. Apparatus according to Claim 11, comprising a region in which the effluent may be accommodated, said region being substantially free from turbulent flow so that particles in suspension contained in the effluent are free to rise towards said free surface of the effluent to form said floating floc and/or foam and or/sludge (FFS).

13. Apparatus for treating effluent containing an aqueous phase and particles in suspension, comprising:
(a) a region in which the effluent may be accommodated, said region being substantially free from turbulent flow so that the particles are free to rise towards a free surface of the effluent to accumulate in the form of floating floc and/or foam and or/sludge (FFS); and
(b) suction means for removing said floating floc and/or foam and or/sludge (FFS) accumulating on said free surface of the effluent.

14. Apparatus according to Claim 11 or Claim 12, wherein said suction means also serves to establish a reduced (less than ambient atmospheric) pressure to which said free surface of the effluent is exposed.

15. Apparatus for treating effluent containing an aqueous phase and particles in suspension, comprising:
(a) a region in which the effluent may be accommodated, said region being substantially free from turbulent flow so that the particles are free to rise towards a free surface of the effluent to accumulate in the form of floating floc and/or foam and or/sludge (FFS); and
(b) means for establishing a reduced (less than ambient atmospheric) pressure at the free surface of the effluent so that the migration of the particles to said free surface is encouraged.

16. Apparatus according to Claim 15, comprising means for removing floating floc and/or foam and or/sludge (FFS) accumulating on said free surface of the effluent, said means for removing floating floc and/or foam and or/sludge (FFS) optionally comprising suction means, said suction means optionally also serving to establish said reduced (less than ambient atmospheric) pressure to which the free surface of the effluent is exposed.

17. Apparatus according to any of Claims 14 to 16, comprising a plurality of regions in which the effluent may be accommodated, each of said regions being substantially free from turbulent flow, means for establishing a reduced (less than ambient atmospheric) pressure at the free surface of the effluent in at least one of said plurality of regions, and means for further treatment of the effluent between at least one of said plurality of regions and a subsequent said region, said means for further treatment of the effluent optionally effecting oxidation and/or ozonation.

18. Apparatus according to any of Claims 12 to 17, comprising means for pre-treatment of the effluent so that the particles are at least in part oxidised or otherwise adapted for upward migration towards said free surface when accommodated in a said region substantially free from turbulent flow, said means for pre-treatment of the effluent optionally effecting electroflocculation and optionally comprising means for applying a unipolar electric potential to the effluent to effect said electroflocculation, and/or said means for pre-treatment of the effluent optionally effecting oxidation.

19. Apparatus according to any of Claims 12 to 18, comprising means for enabling substantially continuous inflow of effluent to at least one said region substantially free from turbulent flow, or means for enabling intermittent inflow of effluent to at least one said region substantially free from turbulent flow, said means for enabling intermittent inflow inflow of effluent optionally effecting initial direction of said inflow to one of a plurality of regions substantially free from turbulent flow and subsequently diverting said inflow to another said region.

20. Apparatus according to any of Claims 11 to 14 and 16 or any of Claims 17 to 19 when dependent on any of Claims 11 to 14 and 16, wherein said suction means is selectively effective either at a location disposed at a level higher than that of said free surface of the effluent and/or at a location disposed at a level lower than that of said free surface of the effluent, each of said locations being in communication with said free surface for the purposes of gas flow and uplift of said floating floc and/or foam and or/sludge (FFS) from said free surface to said location.
